# EUROPEAN PATENT SPECIFICATION

(11) **EP 2 704 927 B1**
(45) Date of publication and mention of the grant of the patent: **01.04.2020**
(21) Application number: 12723625.5
(22) Date of filing: 26.04.2012
(51) Int. Cl.: B60S 1/34, B60S 1/52

(54) **DEVICE FOR SUPPLYING A WASHING FLUID TO A WIPER ARM**
VORRICHTUNG ZUR VERSORGUNG EINES WISCHERARMS MIT EINER WASCHFLÜSSIGKEIT
DISPOSITIF POUR FOURNIR UN FLUIDE DE LAVAGE À UN BRAS D'ESSUIE-GLACE

(30) Priority: 04.05.2011 DE 102011050106
(43) Date of publication of application: 12.03.2014
(73) Proprietor: Valeo Systèmes d'Essuyage, 78322 Le Mesnil Saint Denis (FR)
(72) Inventor: SCHÄUBLE, Michael, 71665 Vaihingen/Enz (DE); EGNER-WALTER, Bruno, 74076 Heilbronn (DE)
(74) Representative: Valeo Systèmes d'Essuyage
(86) International application number: PCT/EP2012/057597
(87) International publication number: WO 2012/150166

(56) References cited:
- US-A- 4 922 570
- US-A- 5 203 049
- US-A- 5 327 614

## Description

### Prior Art

The invention relates to a device for supplying a washing fluid to a wiper arm according to the introductory clause of Claim 1, such a device is disclosed in document US5203049 A.

From practice, washing devices are already known, in which spray openings for applying a washing fluid onto the window of a motor vehicle are either arranged on the wiper arm or else on or respectively in the wiper blade. For this, it is necessary to arrange a supply hose for the washing fluid in the region of the wiper arm, which supply hose supplies the spray openings with the washing fluid.

To do this in the solutions known from practice, the supply hose is guided spaced apart from the bearing piece of the wiper arm above the water tank cover of the motor vehicle transversely to the wiper axis of the wiper arm. The result of this is that on actuation of the wiper device, the supply hose takes part in the swivelling movement of the wiper arm and in so doing is relatively intensively bent or respectively deformed and therefore mechanically stressed. Furthermore, an externally situated, non-protected arrangement of the supply hose is not only unsatisfactory for visual reasons, but also has disadvantages functionally with regard to the risk of mechanical damage or for example through the UV radiation which acts on the supply hose.

### Disclosure of the Invention

Proceeding from the presented prior art, the invention is based on the problem of further developing a device for supplying a washing fluid to a wiper arm according to the introductory clause of Claim 1 such that the mechanical stress of the supply hose on operation of the wiper device is reduced, and that it is, at the same time, protected as much as possible and therefore is also arranged so as not to be visually intrusive. This problem is solved in a device for supplying a washing fluid to a wiper arm with the features of Claim 1 according to the invention in that the supply hose is arranged in the region of the fastening of the bearing piece on the wiper axis parallel to the wiper axis and spaced apart therefrom, and is covered by a covering of the bearing piece, wherein the supply hose is arranged in the region of a recess, wherein the recess is in the form of an aperture in the shape of a pitch circle, of a covering element in the form of a shutter for the bearing piece, wherein the supply hose moves on a swivelling movement of the wiper arm within the recess.

In other words, this means that on actuation of the wiper arm, no bending stresses act on the supply hose, and that the supply hose is invisible from the exterior and therefore is also, for example, protected from environmental influences, by a covering of the bearing piece.

Advantageous further developments of the device according to the invention for supplying a washing fluid to a wiper arm are indicated in the subclaims.

In order to ensure on the one hand a defined guidance of the supply hose and on the other hand to minimize the entry of moisture or dirt into the region of the water tank, provision is made particularly preferably that the supply hose is arranged in the region of a recess, in the form of a pitch circle, of a covering element of the bearing piece.

Here, a particularly protected guidance of the supply hose is achieved if the recess is encompassed at least by a wall surrounding the recess radially, which is axially overlapped and radially surrounded by the covering of the bearing piece.

In order to make possible a problem-free dismantling/disassembly of the wiper blade or respectively of the wiper arm, provision is made furthermore in a further structural embodiment, that on the bearing piece a coupling device is arranged for the at least hydraulic connection of the supply hose with the bearing piece. An embodiment of the coupling device is particularly preferred here in which it is constructed as a plug-in coupling device and therefore no additional tool is required for the mounting or respectively dismantling.

Modern windscreen wiper systems or respectively wiper blades are, moreover, constructed as so-called heatable wiper blades which prevents the wiper blade body or respectively the wiper lip from freezing on the pane of the motor vehicle. Moreover, an electric heating device can be provided, in particular inside the supply hose, which prevents a freezing of the washing fluid in the region of the wiper arm. For this, in a further embodiment of the invention provision is made that parallel to the supply hose at least one electrical supply line is arranged for the electric heating of the wiper blade and/or for the heating of the supply hose, and that the at least one electrical supply line is connected via the coupling device.

Particularly preferably, provision can be made here that with one and the same coupling device at the same time both the hydraulic and also the electric connection is produced. Alternatively, it is of course also conceivable that different plug connectors are used for the hydraulic connection and the electric connection.

In a particularly preferred structural arrangement of the recess, which is in the form of a pitch circle, this is arranged on the side of the wiper axis lying opposite the wiper rod, preferably offset by an angle of 180°. Thereby, the mechanical stress on the parts serving for fastening the bearing piece is minimized.

A further structural alternative makes provision that in the region of the fastening of the bearing piece on the wiper axis a bearing plate is provided, on the side of which facing away from the recess a guide is constructed with guide walls arranged parallel to the guide, at least for guiding the supply hose for the washing fluid, and that a coupling device, formed from two plug connectors, is provided. In this embodiment, a defined guidance of the supply line is achieved with a relatively simple mounting of the coupling device.

Further advantages, features and details of the invention will emerge from the following description of preferred example embodiments and with the aid of the drawings.

These show in:
- Fig. 1: a perspective view of a wiper blade, fastened on wiper arm, for cleaning a vehicle pane,
- Fig. 2: a longitudinal section through the wiper arm in the region of its fastening, to illustrate the device according to the invention for supplying the washing fluid,
- Fig. 3: a view in the plane III-III of Fig. 2,
- Fig. 4: a section in the plane III-III of Fig. 2 with a device which is modified with respect to Fig. 2,
- Fig. 5: a detail of the device of Fig. 4 in the direction of the arrow V of Fig. 4.

Identical components or respectively components having an identical function are provided with the same reference numbers in the figures.

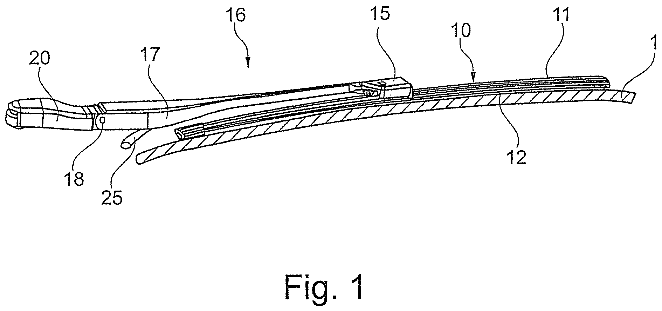

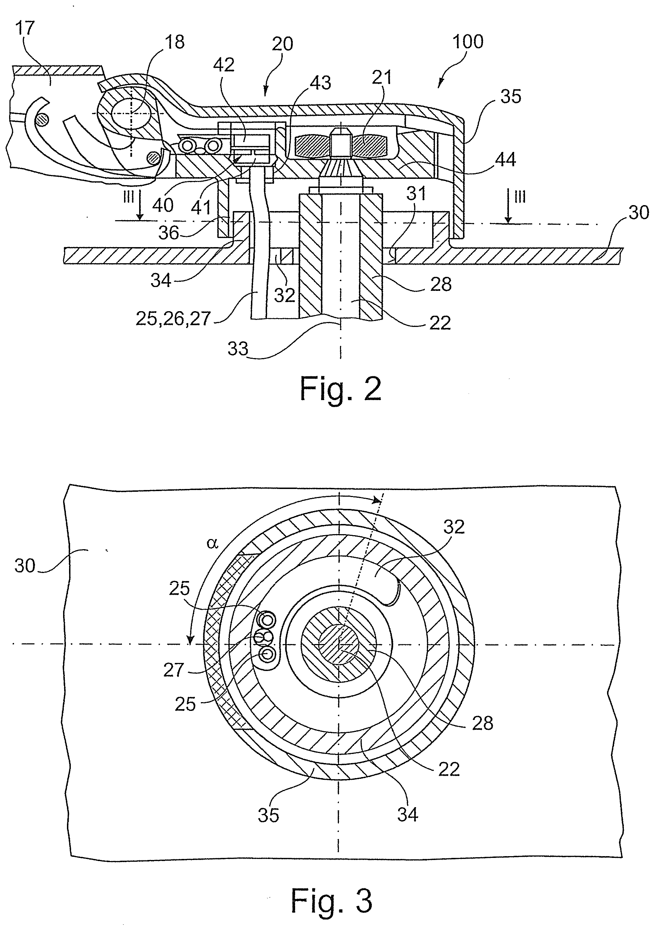

In Fig. 1 parts of a wiper device for cleaning a pane 1 of a motor vehicle are illustrated. The wiper device comprises a wiper blade 10 with a wiper blade body 11 and a wiper lip 12 which is in abutting contact with the pane 1. The wiper blade 10 is fastened exchangeably to a wiper arm 16 by means of a wiper blade adapter 15 which is not illustrated in further detail. The wiper arm 16 comprises a wiper rod 17, which is fastened in an articulation 18 swivellably on a bearing piece 20 of the wiper device. The bearing piece 20 is fastened in a torque-proof manner on a wiper axis 22 by means of a fastening nut 21 (see Fig. 2). The wiper axis 22 is connected with a wiper motor, which is not illustrated, which swivels the wiper arm 16 to and fro for cleaning the pane 1.

In the region of the wiper arm 16, in particular in the region of the wiper rod 17, preferably, however, in the region of the wiper blade 10, spray openings, which are not illustrated, are arranged for supplying a washing fluid onto the pane 1 of the motor vehicle. By means of the spray openings, the pane 1 can be cleaned in a known manner with simultaneous moving to and fro of the wiper blade 10. Wiper blades 10 which have spray openings are known for example from the applicant's DE 10 2009 043 695 A1.

At least one hose, guided out in Fig. 1 from its normal position only for better detectability, in the form of a supply line 25, which is otherwise guided inside the wiper rod 17 and inside the bearing piece 20, serves to supply the washing fluid from a storage container for the washing fluid, arranged in the engine compartment region of the motor vehicle, which fluid is conveyed by means of a pump. With the separate supply of the two longitudinal sides of the wiper blade 10 with the washing fluid, two separate supply lines 25 are provided, which are connected with the respective longitudinal side of the wiper blade 10. Moreover, provision can be made that respectively a first electrical line 26 is guided or respectively arranged inside the supply line 25 or respectively inside the supply lines 25, which electrical line prevents a freezing of the washing fluid in the supply line 25. A second electrical line 27 can be provided in order to heat the wiper blade body 11, so that a freezing of the wiper blade 10 on the pane 1 of the motor vehicle is prevented in the case of cold external temperatures.

As can be seen from viewing Fig. 2 and 3 together, the wiper axis 22 is arranged in a bearing sleeve 28 carrying the wiper axis 22, which bearing sleeve penetrates a shutter 30, which is usually constructed as a covering of a water tank, in a first recess 31 in the form of a through hole.

For the protected guidance of the at least one supply line 25 and of the electric lines 26, 27, the wiper device has a device 100 which has the following features: a second recess 32 in the form of an aperture in the shape of a pitch circle is constructed in the shutter 30 spaced apart radially with respect to the first recess 31. The angle range α of the second recess 32 is adapted to the swivelling angle of the wiper arm 16. Inside the second recess 32 the at least one supply line 25 and the two electrical lines 26, 27 penetrate through the shutter 30 from the side of the engine compartment of the motor vehicle, wherein it is essential to the invention that the at least one supply line 25 and the electrical lines 26, 27 are arranged parallel and spaced apart with respect to the longitudinal axis 33 of the wiper axis 22.

Spaced apart from the second recess 32, the shutter 30 has on its upper side, facing the bearing piece 20, a radially encircling wall 34, which reaches from the exterior radially up to the second recess 32. The wall 34 is surrounded radially at a small distance and axially overlapped by a covering cap 35, so that an annular clearance 36 is formed between the wall 34 and the covering cap 35. The supply lines 25 and the electrical lines 26, 27 are constructed so as to be divided in the region of the bearing piece 20, in order to make possible a dismantling or respectively mounting of the supply lines 25 situated above the shutter 30, and of the electrical lines 26, 27, for example in the case of an exchanging of the wiper blade 10 or of the wiper arm 16. For this, the device 100 contains furthermore a coupling device 40 in the form of a plug connector 41 and of a mating connector 42 which is able to be connected with the connector 41, which either simultaneously connect the supply lines 25 and the electrical lines 26, 27 with each other, or else respectively connect the said lines separately in the form of several connectors. For this, the connector 41 on the vehicle side is able to be passed through a hole 43 in a bearing plate 44 of the bearing piece 20, which is aligned with the second recess 32.

As can be seen in particular by means of viewing together Fig. 2 and 3, the supply lines 25 and the electrical lines 26, 27 move on a swivelling movement of the wiper arm 16 within the second recess 32 parallel to the longitudinal axis 33 of the wiper axis 22, so that no bending forces at all act on the supply lines 25 and the electrical lines 26, 27.

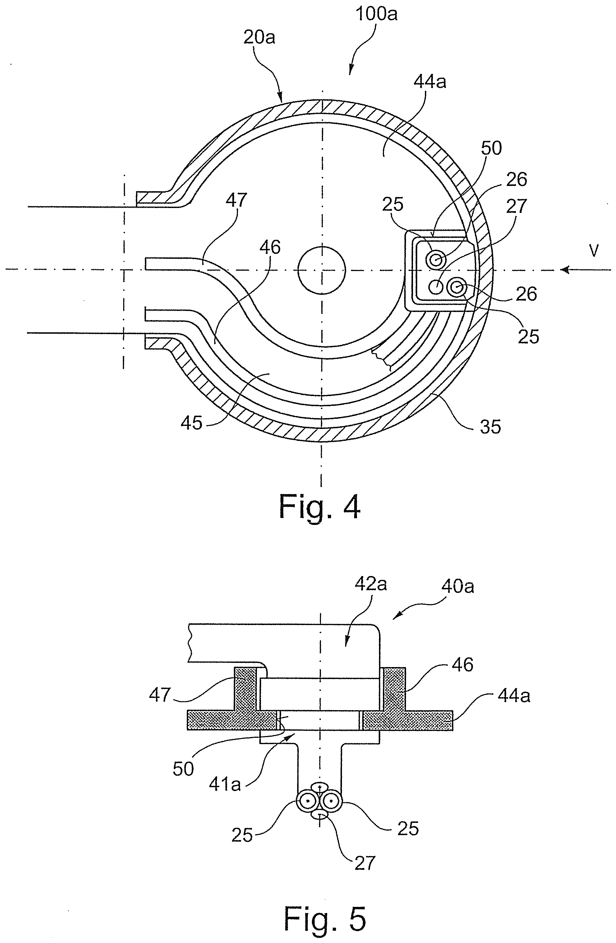

In Fig. 4 and 5 a modified device 100a is illustrated. In the device 100a the bearing plate 44a of the bearing piece 20a has a guide 45 which is surrounded on the edge side at a distance by two guide walls 46, 47 projecting from the upper side of the bearing plate 44a. The guide 45 serves to guide the supply lines 25 to 27 on the upper side of the bearing plate 44a. On the side of the bearing plate 44a facing away from the wiper rod 17, an aperture 50 is formed, which is U-shaped in top view, to receive a coupling device 40a which is in alignment with the second recess 32 (not illustrated). The coupling device 40a has a plug connector 41a on the vehicle side and a mating connector 42a on the wiper arm side, which in the assembled state are held in a form- and force-fitting manner in the aperture 50. The device 100a brings about a particularly good sealing and guiding of the supply lines 25 and of the electrical lines 26, 27 in the region of the bearing plate 44a.

In the device 100 according to Fig. 2 and 3, the second recess 32 is arranged on the side of the wiper arm 16. However, an arrangement of the second recess 32 is preferred in accordance with the arrangement of the aperture 50 in Fig. 4 and 5 on the side of the wiper axis 22 lying opposite the wiper arm 16 or respectively the wiper rod 17, in order to minimize the mechanical stress of the components or respectively the bearing of the wiper arm 16.

The devices 100, 100a so far described can be altered or modified in a variety of ways, without departing from the idea of the invention. This consists therein to guide the at least one supply line 25 and if applicable (if present) the electrical lines 26, 27 in the feedthrough region from the engine compartment or respectively from the water tank parallel to the wiper axis 22 and at the same time to conceal them by means of preferably the bearing sleeve 20, 20a or respectively a covering cap 35 associated with the bearing sleeve 20, 20a.

### List of reference numbers

- 1: pane
- 10: wiper blade
- 11: wiper blade body
- 12: wiper lip
- 15: wiper blade adapter
- 16: wiper arm
- 17: wiper rod
- 18: articulation
- 20,a: bearing piece
- 21: fastening nut
- 22: wiper axis
- 25: supply line
- 26: first electrical line
- 27: second electrical line
- 28: bearing sleeve
- 30,a: shutter
- 31: first recess
- 32: second recess
- 33: longitudinal axis
- 34: wall
- 35: covering cap
- 36: annular clearance
- 40: coupling device
- 41,a: plug connector
- 42,a: mating connector
- 43: hole
- 44,a: bearing plate
- 45: guide
- 46: guide wall
- 47: guide wall
- 50: aperture

- 100: device
- α: angle range

## Claims

1. A device (100; 100a) for supplying a washing fluid to a wiper arm (16) comprising a bearing piece (20, 20a), a wiper axis (22), a wiper rod (17), a wiper arm (16), a wiper blade, at least a supply hose (25)for the washing fluid, a covering (35) of the bearing piece (20 20a) and a covering element (30), wherein said bearing piece (20; 20a) is mounted in said wiper axis (22), on which said wiper rod (17) of the wiper arm (16) is swivellably fastened, wherein said wiper blade (10) is fastened exchangeably on the wiper arm (16), and wherein said at least one supply hose (25) for the washing fluid is coupled with a supply device on the vehicle side, and which is guided in or on the wiper arm (16),
the supply hose (25) is arranged in the region of the fastening of the bearing piece (20; 20a) on the wiper axis (22) parallel to the wiper axis (22) and spaced apart therefrom, and is covered by said covering (35) of the bearing piece (20; 20a),
**characterized in that**
the supply hose (25) is arranged in the region of a recess (32), wherein the recess is in the form of an aperture in the shape of a pitch circle, of said covering element (30) in the form of a shutter for the bearing piece (20), wherein the supply hose (25) moves on a swivelling movement of the wiper arm (16) within the recess (32).

2. The device according to Claim 1,
**characterized in that**
the recess (32) is encompassed at least by a wall (34) surrounding the recess (32) radially, which is axially overlapped and radially surrounded by the covering (35) of the bearing piece (20).

3. The device according to one of Claims 1 or 2,
**characterized in that**
on the bearing piece (20; 20a) a coupling device (40; 40a) is arranged for the at least hydraulic connection of the supply hose (25) with the bearing piece (20; 20a).

4. The device according to Claim 3,
**characterized in that**
the coupling device (40; 40a) is constructed as a plug-in coupling device (40; 40a).

5. The device according to Claim 3 or 4,
**characterized in that**
parallel to the supply hose (25) at least one electrical supply line (26, 27) is arranged for the electric heating of the wiper blade (10) and/or for the heating of the supply hose (25), and that the at least one electrical supply line (26, 27) is connected via the coupling device (40; 40a).

6. The device according to one of Claims 1 to 5,
**characterized in that** the recess (32) in the form of a pitch circle is arranged on the side of the wiper axis (22) lying opposite the wiper rod (17), preferably offset by an angle of 180°.

7. The device according to Claim 6,
**characterized in that**
the size of the recess (32) is adapted to the swivel angle of the wiper arm (16).

8. The device according to one of Claims 1 to 7,
**characterized in that**
in the region of the fastening of the bearing piece (20a) on the wiper axis (22) a bearing plate (44a) is provided, on the side of which facing away from the recess (32) a guide (45)is constructed with guide walls (46, 47) arranged parallel to the guide (45) at least for guiding the supply hose (25) for the washing fluid, and that a coupling device (40a), formed from two plug connectors (41a, 42a) is provided.

9. The device according to Claim 8,
**characterized in that**
the coupling device (40a) is held fixedly in a U-shaped aperture (50) of the bearing plate (44a).

## Patentansprüche

1. Vorrichtung (100; 100a) zum Zuführen einer Waschflüssigkeit an einen Wischerarm (16), umfassend ein Lagerstück (20, 20a), eine Wischerachse (22), eine Wischerstange (17), einen Wischerarm (16), ein Wischerblatt, mindestens einen Zuführschlauch (25) für die Waschflüssigkeit, eine Abdeckung (35) des Lagerstücks (20, 20a) und ein Abdeckelement (30), wobei das Lagerstück (20; 20a) in der Wischerachse (22) montiert ist, an der die Wischerstange (17) des Wischerarms (16) schwenkbar befestigt ist, wobei das Wischerblatt (10) austauschbar am Wischerarm (16) befestigt ist, und wobei der mindestens eine Zuführschlauch (25) für die Waschflüssigkeit mit einer fahrzeugseitigen Versorgungseinrichtung gekoppelt ist, die im oder am Wischerarm (16) geführt ist,
wobei der Zuführschlauch (25) im Bereich der Befestigung des Lagerstücks (20; 20a) auf der Wischerachse (22) parallel zur Wischerachse (22) und davon beabstandet angeordnet ist und durch die Abdeckung (35) des Lagerstücks (20; 20a) abgedeckt wird,
**dadurch gekennzeichnet, dass**
der Zuführschlauch (25) im Bereich einer Aussparung (32) angeordnet ist, wobei die Aussparung als teilkreisförmige Öffnung des als Klappe ausgebildeten Abdeckelements (30) für das Lagerstück (20) ausgebildet ist, wobei sich der Zuführschlauch (25) bei einer Schwenkbewegung des Wischerarms (16) innerhalb der Aussparung (32) bewegt.

2. Vorrichtung nach Anspruch 1,
**dadurch gekennzeichnet, dass**
die Aussparung (32) mindestens durch eine die Aussparung (32) radial umgebende Wand (34) umschlossen ist, die durch die Abdeckung (35) des Lagerstücks (20) axial überlappt und radial umgeben ist.

3. Vorrichtung nach einem der Ansprüche 1 oder 2,
**dadurch gekennzeichnet, dass**
am Lagerstück (20; 20a) eine Kupplungsvorrichtung (40; 40a) für die mindestens hydraulische Verbindung des Zuführschlauchs (25) mit dem Lagerstück (20; 20a) angeordnet ist.

4. Vorrichtung nach Anspruch 3,
**dadurch gekennzeichnet, dass**
die Kupplungsvorrichtung (40; 40a) als Steckkupplungsvorrichtung (40; 40a) ausgeführt ist.

5. Vorrichtung nach Anspruch 3 oder 4,
**dadurch gekennzeichnet, dass**
parallel zum Zuführschlauch (25) mindestens eine elektrische Versorgungsleitung (26, 27) zur elektrischen Beheizung des Wischerblatts (10) und/oder zur Beheizung des Zuführschlauchs (25) angeordnet ist, und dass die mindestens eine elektrische Versorgungsleitung (26, 27) über die Kupplungsvorrichtung (40; 40a) angeschlossen ist.

6. Vorrichtung nach einem der Ansprüche 1 bis 5,
**dadurch gekennzeichnet, dass** die teilkreisförmige Aussparung (32) auf der der Wischerstange (17) gegenüberliegenden Seite der Wischerachse (22), vorzugsweise um einen Winkel von 180° versetzt, angeordnet ist.

7. Vorrichtung nach Anspruch 6,
**dadurch gekennzeichnet, dass**
die Größe der Aussparung (32) an den Schwenkwinkel des Wischerarms (16) angepasst ist.

8. Vorrichtung nach einem der Ansprüche 1 bis 7,
**dadurch gekennzeichnet, dass**
im Bereich der Befestigung des Lagerstücks (20a) auf der Wischerachse (22) ein Lagerblech (44a) vorgesehen ist, an dessen der Aussparung (32) abgewandter Seite eine Führung (45) mit parallel zur Führung (45) angeordneten Führungswänden (46, 47) mindestens zum Führen des Zuführschlauchs (25) für die Waschflüssigkeit ausgebildet ist, und dass eine aus zwei Steckverbindern (41a, 42a) ausgebildete Kupplungsvorrichtung (40a) vorgesehen ist.

9. Vorrichtung nach Anspruch 8,
**dadurch gekennzeichnet, dass**
die Kupplungsvorrichtung (40a) in einer U-förmigen Öffnung (50) der Lagerplatte (44a) festgehalten wird.

## Revendications

1. Dispositif (100 ; 100a) pour fournir un fluide de lavage à un bras d'essuie-glace (16), comprenant une pièce d'appui (20, 20a), un axe d'essuie-glace (22), une tige d'essuie-glace (17), un bras d'essuie-glace (16), un balai d'essuie-glace, au moins un tuyau d'alimentation (25) pour le fluide de lavage, un recouvrement (35) de la pièce d'appui (20, 20a) et un élément de recouvrement (30), ladite pièce d'appui (20, 20a) étant montée dans ledit axe d'essuie-glace (22), sur lequel ladite tige d'essuie-glace (17) du bras d'essuie-glace (16) est fixée de manière pivotante, ledit balai d'essuie-glace (10) étant fixé de manière interchangeable sur le bras d'essuie-glace (16), et ledit au moins un tuyau d'alimentation (25) pour le fluide de lavage étant accouplé à un dispositif d'alimentation sur le côté de véhicule et étant guidé dans ou sur le bras d'essuie-glace (16),
le tuyau d'alimentation (25) étant disposé dans la zone de la fixation de la pièce d'appui (20 ; 20a) sur l'axe d'essuie-glace (22) parallèlement à l'axe d'essuie-glace (22) et espacé de celui-ci, et étant recouvert par ledit recouvrement (35) de la pièce d'appui (20 ; 20a),
**caractérisé en ce que**
le tuyau d'alimentation (25) est disposé dans la zone d'un évidement (32), l'évidement étant sous la forme d'une ouverture ayant la forme d'un cercle primitif, dudit élément de recouvrement (30) sous la forme d'un obturateur pour la pièce d'appui (20), le tuyau d'alimentation (25) se déplaçant lors d'un mouvement de pivotement du bras d'essuie-glace (16) à l'intérieur de l'évidement (32).

2. Dispositif selon la revendication 1,
**caractérisé en ce que**
l'évidement (32) est entouré au moins par une paroi (34) entourant radialement l'évidement (32), qui est chevauché axialement et entouré radialement par le recouvrement (35) de la pièce d'appui (20).

3. Dispositif selon la revendication 1 ou 2,
**caractérisé en ce que**
sur la pièce d'appui (20 ; 20a) est disposé un dispositif d'accouplement (40 ; 40a) pour la liaison au moins hydraulique du tuyau d'alimentation (25) avec la pièce d'appui (20 ; 20a).

4. Dispositif selon la revendication 3,
**caractérisé en ce que**
le dispositif d'accouplement (40 ; 40a) est conçu comme un dispositif d'accouplement enfichable (40 ; 40a).

5. Dispositif selon la revendication 3 ou 4,
**caractérisé en ce que**
parallèlement au tuyau d'alimentation (25), au moins une ligne d'alimentation électrique (26, 27) est disposée pour le chauffage électrique du balai d'essuie-glace (10) et/ou pour le chauffage du tuyau d'alimentation (25), et **en ce que** l'au moins une ligne d'alimentation électrique (26, 27) est connectée par l'intermédiaire du dispositif d'accouplement (40 ; 40a).

6. Dispositif selon l'une des revendications 1 à 5,
**caractérisé en ce que**
l'évidement (32) sous la forme d'un cercle primitif est disposé sur le côté de l'axe d'essuie-glace (22) opposé à la tige d'essuie-glace (17), de préférence décalé d'un angle de 180°.

7. Dispositif selon la revendication 6,
**caractérisé en ce que**
la taille de l'évidement (32) correspond à l'angle de pivotement du bras d'essuie-glace (16).

8. Dispositif selon l'une des revendications 1 à 7,
**caractérisé en ce que**
dans la zone de la fixation de la pièce d'appui (20a) sur l'axe d'essuie-glace (22) est disposée une plaque d'appui (44a), sur un côté de laquelle, opposé à l'évidement (32), un guide (45) est construit avec des parois de guidage (46, 47) disposées parallèlement au guide (45) au moins pour guider le tuyau d'alimentation (25) pour le fluide de lavage, et **en ce qu'**un dispositif d'accouplement (40a) formé de deux connecteurs mâles (41a, 42a) est fourni.

9. Dispositif selon la revendication 8,
**caractérisé en ce que**
le dispositif d'accouplement (40a) est maintenu de manière fixe dans une ouverture en forme de U (50) de la plaque d'appui (44a).
